# EUROPÄISCHE PATENTSCHRIFT

(11) **EP 2 032 878 B1**
(45) Veröffentlichungstag und Bekanntmachung des Hinweises auf die Patenterteilung: **02.12.2009**
(21) Anmeldenummer: 07729945.1
(22) Anmeldetag: 06.06.2007
(51) Int. Cl.: F16H 61/28

(54) **EINRICHTUNG ZUM STEUERN EINES FLUIDBETÄTIGTEN DOPPELWIRKENDEN STELLZYLINDERS**
DEVICE FOR CONTROLLING A FLUID-ACTIVATED DOUBLE-ACTION OPERATING CYLINDER
DISPOSITIF POUR COMMANDER UN CYLINDRE DE RÉGLAGE À DOUBLE EFFET, ACTIONNÉ PAR UN FLUIDE

(30) Priorität: 29.06.2006 DE 102006030034
(43) Veröffentlichungstag der Anmeldung: 11.03.2009
(73) Patentinhaber: ZF Friedrichshafen AG, 88038 Friedrichshafen (DE)
(72) Erfinder: PETZOLD, Rainer, 88045 Friedrichshafen (DE); MÜLLER, Bernd, 88046 Friedrichshafen (DE); WOLFGANG, Werner, 88213 Ravensburg (DE); JÄGER, Thomas, 88074 Meckenbeuren (DE); STEINBORN, Mario, 88046 Friedrichshafen (DE); REITH, Ulrich, 88281 Schlier (DE); HERTER, Peter, 88213 Ravensburg (DE); MAIR, Roland, 88069 Tettnang (DE)
(86) Internationale Anmeldenummer: PCT/EP2007/055570
(87) Internationale Veröffentlichungsnummer: WO 2008/000599

(56) Entgegenhaltungen:
- EP-A- 1 701 067
- WO-A-98/13627
- DE-A1- 19 931 973
- US-A- 4 110 733
- US-A- 5 829 335

## Beschreibung

Die Erfindung betrifft eine Einrichtung zum Steuern eines fluidbetätigten doppeltwirkenden Stellzylinders gemäß dem Oberbegriff des Patentanspruchs 1.

Fluidbetätigte, doppeltwirkende Stellzylinder der im Oberbegriff des Patentanspruchs 1 genannten Art werden beispielsweise als Stellantriebe für automatisierte Getriebe bzw. Kupplungen in Kraftfahrzeugen eingesetzt, wobei es sich um pneumatische oder hydraulische Systeme handeln kann. Der Kolben eines doppeltwirkenden Stellzylinders kann bekanntermaßen Bewegungen in zwei Richtungen vollführen. Der Fluidzulauf bzw. Fluidablauf für die Zylinderkammern eines Stellzylinders bzw. deren Absperrung gegenüber dem Zu- bzw. Ablauf werden im Allgemeinen über mit der Steuervorrichtung verbundene Schaltventile gesteuert. Vor dem Stellzylinder ist zudem in einer Druckmittelleitung nicht selten eine Drucksensorvorrichtung vorgesehen, die den Fluidversorgungsdruck erfasst und an eine Steuerungsvorrichtung weiterleitet, so dass über den ermittelten Betätigungsdruck auf die Betätigungskraft bzw. Schaltkraft des Stellzylinders geschlossen werden kann.

Aus der DE 102 49 341 A1 ist eine Einrichtung der im Oberbegriff des Anspruchs 1 genannten Art bekannt, bei der in einer an eine Druckfluidquelle angeschlossenen Druckfluidleitung vor deren Verzweigung zu den beiden Schaltventilen ein Drucksensor vorgesehen ist, welcher den Fluiddruck in der Druckfluidleitung erfasst und dessen Wert an eine Steuerungsvorrichtung weiterleitet. Wegen dynamischer Effekte, beispielsweise einer Kompressibilität von Druckfluiden, dem Auftreten von Staudrücken auf der Ablaufseite des Stellzylinders usw. ist diese Lösung ungenau, da nur der Druck auf der Zulaufseite, nicht jedoch ein eventuell vorhandener Druck auf der Ablaufseite erfasst wird. Ein weiterer Nachteil wird darin gesehen, dass Steuerungs- und Regelungsverfahren, bei denen in beiden Zylinderkammern des Stellzylinders definierte Drücke eingestellt werden sollen, mit dem bekannten Verfahren nicht realisierbar sind.

Die DE 199 31 973 A1 zeigt eine Einrichtung ähnlich der in der zuvor genannten Druckschrift offenbarten Einrichtung. Auch in diesem Fall ist ein Drucksensor vor einem Verzweigungspunkt, in dem sich eine Druckfluidleitung zu zwei Schaltventilen hin verzweigt, angeordnet, so dass auch diese Einrichtung die gleichen, im Zusammenhang mit der zuvor genannten Druckschrift beschriebenen Nachteile hat.

Vor diesem Hintergrund liegt der Erfindung die Aufgabe zugrunde, eine Einrichtung der im Oberbegriff des Anspruchs 1 genannten Art zu schaffen, mit der bei statischen und dynamischen Betriebszuständen die tatsächliche Schaltkraft des Stellzylinders gemessen und daher mit hoher Qualität gesteuert, adaptiert und geregelt werden kann.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass die Schaltkraft eines Stellzylinders jeweils sowohl vom Zulaufdruck in einer der beiden Zylinderkammern als auch vom Ablaufdruck in der anderen Zylinderkammer abhängt.

Demnach geht die Erfindung aus von einer Einrichtung zum Steuern eines fluidbetätigten doppeltwirkenden Stellzylinders mit zwei durch einen Stellkolben voneinander getrennten Zylinderkammern, sowie mit jeweils einem einer jeden Zylinderkammer zugeordneten Schaltventil zum Steuern des Fluidzulaufs und Fluidablaufs für die Zylinderkammern, ferner mit einer Drucksensorvorrichtung zum Erfassen des Fluidversorgungsdrucks und mit einer mit den Schaltventilen und der Drucksensorvorrichtung verbundenen Steuerungseinrichtung.

Zur Lösung der gestellten Aufgabe ist dabei vorgesehen, dass als Drucksensorvorrichtung ein zwischen den beiden Zylinderkammern angeordneter Differenzdrucksensor vorgesehen ist.

Mit einer derartigen Einrichtung kann die Druckdifferenz zwischen den beiden Zylinderkammern und damit bei Bekanntsein der Stellzylindergeometrie die tatsächliche Betätigungskraft bzw. Schaltkraft des Stellzylinders ermittelt werden. Diese Information ermöglicht dann auch eine genaue Überwachung und gegebenenfalls eine genaue Regelung dieser Schaltkraft.

Im statischen Zustand, also bei geöffnetem Schaltventil für eine der beiden Zylinderkammern kann wie bei den bekannten Anordnungen der Fluidversorgungsdruck vor dem Stellzylinder ohne weiteres erfasst werden.

Differenzdrucksensoren sind marktübliche und preiswerte Bauelemente, so dass sich insgesamt eine kostengünstige Anordnung ergibt.

Gemäß einer bevorzugten Ausführungsform der Erfindung ist vorgesehen, dass den beiden Schaltventilen eine mit der Steuerungseinrichtung verbundene, steuerbare Druckregeleinrichtung vorgeschaltet ist, die ihre Steuerungsinformationen über den ebenfalls mit der Steuerungseinrichtung verbundenen Differenzdrucksensor erhält.

Bei einer Einrichtung der im Oberbegriff des Anspruchs 1 genannten Art mit einer an eine Druckfluidquelle angeschlossenen Druckfluidleitung, die sich vor den Schaltventilen in zwei Schaltventil-Zulaufleitungen verzweigt, ist gemäß einer weiteren Ausgestaltung der Erfindung vorgesehen, dass die Druckregeleinrichtung ein vor dem Verzweigungspunkt angeordnetes, von der Steuerungseinrichtung angesteuertes Druckregelventil ist, mittels dessen der Fluidversorgungsdruck für die beiden Schaltventile und die nachgeordneten Zylinderkammern geregelt werden kann. Derartige Druckregelventile sind beispielsweise als pulsweitenmodulierte, getaktete, elektromagnetische Schaltventile ausgebildet. Auf diese Weise lässt sich der Fluidversorgungsdruck für die beiden Zylinderkammern in Abhängigkeit von dem Informationssignal des Differenzdrucksensors exakt steuern, adaptieren oder regeln.

Für den Fall, dass Steuerungs- und Regelungsverfahren eingesetzt werden sollen, bei denen in beiden Zylinderkammern definierte Drücke eingestellt werden sollen, ist gemäß einer weiteren Ausgestaltung der Erfindung vorgesehen, dass die Druckregeleinrichtung jeweils ein in jeder der Zulaufleitungen, also hinter dem Verzweigungspunkt angeordnetes, von der Steuerungseinrichtung angesteuertes Druckregelventil umfasst, wobei die Steuerungsinformationen zur Ansteuerung dieser beiden Druckregelventile wiederum von dem Differenzdrucksensor kommen.

Die Erfindung lässt sich anhand eines Ausführungsbeispiels weiter erläutern. Dazu ist der Beschreibung eine Zeichnung beigefügt. In dieser zeigt:
- Fig. 1: schematisch eine Einrichtung mit einem Differenzdruck- sensor sowie mit einem vor einem Verzweigungspunkt in der Druckfluidleitung angeordneten Druckregelventil und
- Fig. 2: eine Einrichtung etwa gemäß der Fig. 1, jedoch mit zwei hinter einem Verzweigungspunkt in der Druckfluidleitung angeordneten Druckregelventilen.

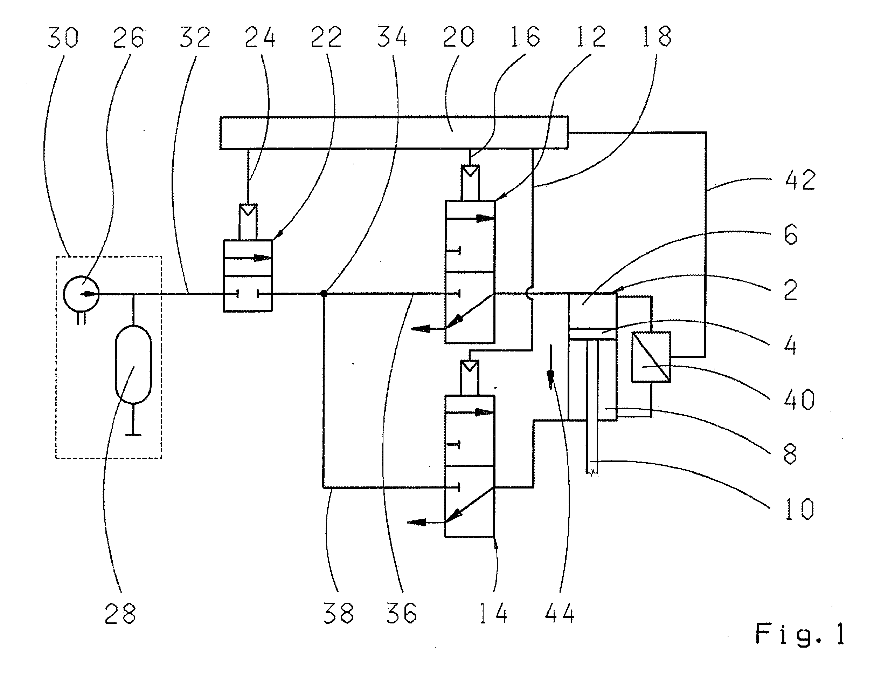

Die Fig. 1 zeigt demnach schematisch eine Einrichtung zum Steuern eines fluidbetätigten, doppeltwirkenden Stellzylinders 2 mit zwei durch einen Stellkolben 4 voneinander getrennten Zylinderkammern 6 bzw. 8. Der Stellkolben 4 ist mit einer Kolbenstange 10 verbunden, die durch eine Endwand der Zylinderkammer 8 hindurch tritt und dazu dient, ein zu verstellendes Bauteil zu bewegen, wie an sich bekannt ist.

Der ersten Zylinderkammer 6 ist ein steuerbares, als 3/2-Wege-Elektromagnetventil ausgebildetes Schaltventil 12 zugeordnet, welches den Fluidzulauf und Fluidablauf für die Zylinderkammer 6 sowie die Abtrennung dieser Zylinderkammer von dem Zulauf bzw. Ablauf steuert. Der zweiten Zylinderkammer 8 ist ein gleichartiges Schaltventil 14 zugeordnet. Die Schaltventile 12 bzw. 14 sind über zugeordnete Steuerungsleitungen 16 bzw. 18 mit einer Steuerungseinrichtung 20 verbunden.

Den beiden Schaltventilen 12 und 14 ist eine steuerbare Druckregeleinrichtung vorgeschaltet, die ebenfalls über eine Steuerungsleitung 24 mit der Steuerungseinrichtung 20 verbunden ist. Die Druckregeleinrichtung ist im dargestellten Ausführungsbeispiel als putsweitenmodutiertes, getaktetes Druckregelventil 22 ausgebildet.

Die Druckfluidversorgung der Einrichtung erfolgt über eine beispielsweise eine Fluidpumpe 26 und einen Druckfluidspeicher 28 umfassende Druckfluidquelle 30, an die eine Druckfluidleitung 32 angeschlossen ist. Die Druckfluidleitung 32 verzweigt sich in einem Verzweigungspunkt 34 in zwei Schaltventil-Zulaufleitungen 36 bzw. 38 zu den beiden Schaltventilen 12 und 14.

Zwischen der ersten Zylinderkammer 6 und der zweiten Zylinderkammer 8 des Stellzylinders 2 ist drucktechnisch ein Differenzdrucksensor 40 angeordnet, welcher die Druckdifferenz zwischen diesen beiden Zylinderkammern 6, 8 erfasst und ein dieser Druckdifferenz entsprechendes Signal über eine Signalleitung 42 an die Steuerungseinrichtung 20 weiterleitet.

In der Fig. 1 sind die beiden Schaltventile 12 und 14 in einer Stellung dargestellt, bei der die zugeordneten Zylinderkammern 6 bzw. 8 nach außen entlüftet werden. Um den Stellkolben 4 beispielsweise in Richtung des Pfeils 44 zu bewegen, wird die erste Zylinderkammer 6 über das Schaltventil 12 mit der Zulaufleitung 36 verbunden, während die zweite Zylinderkammer 8 weiter entlüftet wird. Über den Differenzdrucksensor 40 wird die Druckdifferenz zwischen der ersten Zylinderkammer 6 und der zweiten Zylinderkammer 8 und damit die tatsächlich zur Verfügung stehende Stellkraft des Stellzylinders 2 gemessen. Ein entsprechendes Druckdifferenz-Signal wird an die Steuerungseinrichtung 20 abgegeben, die diese Information zur Ansteuerung des Druckregelventils 22 verwendet, welches den Arbeitsdruck in der ersten Zylinderkammer 6 präzise auf den gewünschten Wert einregelt.

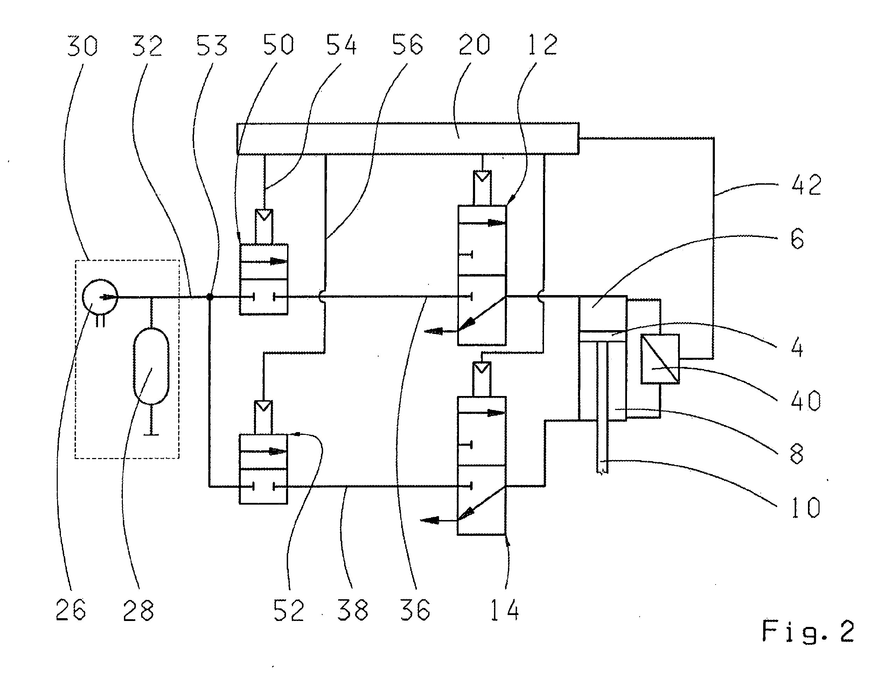

Fig. 2 zeigt eine Einrichtung, die der Einrichtung gemäß der Fig. 1 weitgehend entspricht und insoweit nicht nochmals im Einzelnen beschrieben wird. Sich entsprechende Bauteile in den beiden Figuren sind jeweils mit den gleichen Bezugszeichen versehen.

Im Gegensatz zu der Einrichtung gemäß Fig. 1 weist die Einrichtung nach der Fig. 2 zwei Druckregelventile 50 und 52 auf, die hinter einem Verzweigungspunkt 53 der Druckfluidleitung 32 jeweils in den Zulaufleitungen 36 bzw. 38 zu den beiden Schaltventil 12 und 14 angeordnet sind. Das Druckregelventil 50 ist dabei dem Schaltventil 12 und das Druckregelventil 52 dem Schaltventil 14 zugeordnet. Die in Fig. 2 dargestellte Einrichtung ermöglicht Steuerungs- und Regelungsverfahren, bei denen in beiden Zylinderkammern 6 bzw. 8 definierte Drücke eingestellt werden sollen.

Für diesen Fall werden die erste Zylinderkammer 6 über das zugeordnete Schaltventil 12 und die zweite Zylinderkammer 8 über das zugeordnete Schaltventil 14 mit dem Druckfluid-Zulauf verbunden, wobei der Fluiddruck in den Zylinderkammern 6 bzw. 8 individuell über die zugeordneten Druckregelventile 50 bzw. 52 eingestellt wird. Die tatsächliche Druckdifferenz zwischen den beiden Zylinderkammern 6, 8 wird über den mit diesen Zylinderkammern verbundenen Differenzdrucksensor 40 erfasst und über die Steuerungsleitung 42 in die Steuerungseinrichtung 20 eingegeben, welche die Druckregelventile 50 bzw. 52 über die zugeordneten Steuerungsleitungen 54 bzw. 56 ansteuert.

### Bezugszeichen

- 2: Stellzylinder
- 4: Stellkolben
- 6: Zylinderkammer
- 8: Zylinderkammer
- 10: Kolbenstange
- 12: Schaltventil
- 14: Schaltventil
- 16: Steuerungsleitung
- 18: Steuerungsleitung
- 20: Steuerungseinrichtung
- 22: Druckregelventil
- 24: Steuerungsleitung
- 26: Druckfluidpumpe
- 28: Druckfluidspeicher
- 30: Druckfluidquelle
- 32: Druckfluidleitung
- 34: Verzweigungspunkt
- 36: Schaltventil-Zulaufleitung
- 38: Schaltventil-Zulaufleitung
- 40: Differenzdrucksensor
- 42: Signalleitung
- 44: Pfeil, Betätigungsrichtung
- 50: Druckregelventil
- 52: Druckregelventil
- 53: Verzweigungspunkt
- 54: Steuerungsleitung
- 56: Steuerungsleitung

## Patentansprüche

1. Einrichtung zur Steuerung eines fluidbetätigten doppeltwirkenden Stellzylinders (2), wobei der Stellzylinder zwei durch einen Stellkolben (4) voneinander getrennte Zylinderkammern (6, 8) und wobei die Einrichtung jeweils ein einer jeden Zylinderkammer (6, 8) zugeordnetes Schaltventil (12, 14) zum Steuern des Fluidzulaufs und Fluidablaufs für die Zylinderkammern (6, 8) und eine Drucksensorvorrichtung (40) zum Erfassen des Fluidversorgungsdrucks sowie eine mit den Schaltventilen (12, 14) und der Drucksensorvorrichtung (40) verbundene Steuerungseinrichtung (20) aufweist, **dadurch gekennzeichnet, dass** als Drucksensorvorrichtung ein drucktechnisch zwischen den beiden Zylinderkammern (6, 8) angeordneter Differenzdrucksensor (40) vorgesehen ist, der die tatsächliche Druckdifferenz zwischen den beiden Zylinderkammem erfaßt, wobei die Druckdifferenz in die Steuerungseinrichtung (20) eingegeben wird.

2. Einrichtung nach Anspruch 1, **dadurch gekennzeichnet, dass** den beiden Schaltventilen (12, 14) eine steuerbare Druckregeleinrichtung vorgeschaltet ist.

3. Einrichtung nach Anspruch 2, mit einer an einer Druckfluidquelle angeschlossenen Druckfluidleitung (32), die sich vor den Schaltventilen (12, 14) in zwei Schaltventil-Zulaufleitungen (36, 38) verzweigt, **dadurch gekennzeichnet, dass** die Druckregeleinrichtung ein vor dem Verzweigungspunkt (34) angeordnetes, von der Steuerungseinrichtung (20) angesteuertes Druckregelventil (22) ist.

4. Einrichtung nach dem Oberbegriff des Anspruches 3, **dadurch gekennzeichnet, dass** die Druckregeleinrichtung jeweils ein in jeder der Zulaufleitungen (36, 38) angeordnetes, von der Steuerungseinrichtung (20) angesteuertes Druckregelventil (50, 52) umfasst.

## Claims

1. Device for controlling a fluid-actuated double-action actuating cylinder (2), the actuating cylinder having two cylinder chambers (6, 8) which are separated from one another by an actuating piston (4), and the device having in each case one control valve (12, 14) which is assigned to each cylinder chamber (6, 8) for controlling the fluid inflow and fluid outflow for the cylinder chambers (6, 8), and a pressure sensor apparatus (40) for detecting the fluid supply pressure and a control device (20) which is connected to the control valves (12, 14) and the pressure sensor apparatus (40), **characterized in that** a differential pressure sensor (40) which is arranged in terms of pressure technology between the two cylinder chambers (6, 8) is provided as pressure sensor apparatus, which differential pressure sensor (40) detects the actual pressure difference between the two cylinder chambers, the pressure difference being input into the control device (20).

2. Device according to Claim 1, **characterized in that** a controllable pressure regulating device is connected in front of the two control valves (12, 14).

3. Device according to Claim 2, having a pressure fluid line (32) which is connected to a pressure fluid source and branches off into two control-valve inflow lines (36, 38) in front of the control valves (12, 14), **characterized in that** the pressure regulating device is a pressure regulating valve (22) which is arranged in front of the branching point (34) and is actuated by the control device (20).

4. Device according to the precharacterizing clause of Claim 3, **characterized in that** the pressure regulating device comprises in each case one pressure regulating valve (50, 52) which is arranged in each of the inflow lines (36, 38) and is actuated by the control device (20).

## Revendications

1. Dispositif de commande d'un cylindre de réglage à double effet actionné par un fluide (2), le cylindre de réglage présentant deux chambres de cylindre (6, 8) séparées l'une de l'autre par un piston de réglage (4) et le dispositif présentant à chaque fois une soupape de commutation (12, 14) associée à chaque chambre de cylindre (6, 8) pour commander l'afflux de fluide et l'écoulement de fluide pour les chambres de cylindre (6, 8) et un dispositif de capteur de pression (40) pour détecter la pression d'alimentation en fluide ainsi qu'un dispositif de commande (20) connecté aux soupapes de commutation (12, 14) et au dispositif de capteur de pression (40), **caractérisé en ce que** l'on prévoit comme dispositif de capteur de pression un capteur de pression différentiel (40) disposé du point de vue de la technique de pression entre les deux chambres de cylindre (6, 8), qui détecte la différence de pression effective entre les deux chambres de cylindre, la différence de pression étant entrée dans le dispositif de commande (20).

2. Dispositif selon la revendication 1, **caractérisé en ce qu'**un dispositif de régulation de pression commandable est disposé en amont des deux soupapes de commutation (12, 14).

3. Dispositif selon la revendication 2, comprenant une conduite de fluide sous pression (32) raccordée à une source de fluide sous pression, qui se ramifie avant les soupapes de commutation (12, 14) en deux conduites d'afflux de soupapes de commutation (36, 38), **caractérisé en ce que** le dispositif de régulation de pression est une soupape de régulation de pression (22) commandée par le dispositif de commande (20) et disposée avant le point de ramification (34).

4. Dispositif selon le préambule de la revendication 3, **caractérisé en ce que** le dispositif de régulation de pression comprend à chaque fois une soupape de régulation de pression (50, 52) commandée par le dispositif de commande (20) et disposée dans chacune des conduites d'afflux (36, 38).
